Europäisches Patentamt

**European Patent Office**

**Office européen des brevets**

(11) Publication number: **0 141 580**
A1

# EUROPEAN PATENT APPLICATION

(21) Application number: **84307124.2**

(22) Date of filing: **17.10.84**

(51) Int. Cl.⁴: **C 03 C 10/00**, H 01 C 7/02, G 01 K 11/00

(30) Priority: **19.10.83 GB 8327949**

(43) Date of publication of application: **15.05.85**
**Bulletin 85/20**

(84) Designated Contracting States: **AT BE CH DE FR GB IT LI LU NL SE**

(71) Applicant: **ROMAG HOLDINGS LIMITED, Patterson Street, Blaydon on Tyne Tyne and Wear (GB)**

(72) Inventor: **Holmes, Alan, 6 Somerset Grove, Darlington Durham (GB)**

(74) Representative: **Shipley, Warwick Grenville Michael, VENNER, SHIPLEY & CO. 368 City Road, London EC1V 2QA (GB)**

(54) **Glass ceramic materials and the use thereof in thermal sensors.**

(57) The present invention provides a glass ceramic material comprising, by weight:
a) 5–60% transition metal oxide or oxides,
b) 2–33% alkaline earth metal oxide or oxides,
c) 0.7–16% alkali metal oxide or oxides,
d) 3.7–40% glass-forming oxide or oxides and
e) 0–39% modifying oxide or oxides.
The present invention is also concerned with thermal sensors containing such a glass ceramic material.

EP 0 141 580 A1

-1-

# GLASS CERAMIC MATERIALS AND THE USE THEREOF IN THERMAL SENSORS

The present invention is concerned with novel glass ceramic materials which are electrically conductive and which undergo a dramatic negative resistance change with increasing temperature, such change being totally reversible. The present invention is also concerned with the use of these basic glass ceramic materials, employing certain micro-techniques to produce highly accurate and very dependably reproducible thermal sensors.

It is known to produce thermal sensors from a wide variety of semiconductive materials, examples of such materials including ferric oxide, nickel manganite, cobalt oxide, silicon, germanium, manganese ferrite and the like.

In particular, hot processed oxide compositions based upon transition metal oxides have been used to form thermistor type devices and devices based upon doped silicon have been used as negative temperature coefficient resistors.

In the field of thermistors, techniques for hot forming transition metal oxide compositions are well known, examples of material types being given in U.S. Patent Specifications Nos. 2,274,592; 2,282,944; 2,298,679; 2,219,365 and 2,274,830.

It is well known in the art of thermistor fabrication that reproducibility and matching between devices is a difficult and expensive process, variable stoichiometry and the presence of impurity dopants often affecting the resistivity of the base material oxide composition. The selection of thermistors by category, using such oxide composition, have been embodied using either statistical sorting techniques or the matching of resistance/temperature curves. Examples of these techniques are given in U.S. Patent Specification No. 3,109,227.

Generally, thermistors are manufactured to a fairly wide tolerance, for example 15% from device to device, and are selected by the aforementioned techniques into percentage tolerance band and resistance/temperature curve matched categories. Such selected thermistors may have very tight tolerances, for example 0.5% from device to device, and may track identically or almost identically within a specified temperature range. Such devices are desirable where the replacement of a sensor may

-3-

affect circuit operation, unless the replacement is virtually identical to the replaced sensor. Furthermore, thermistor devices are generally bulk devices having relatively large thermal masses and have correspondingly long response times and a low sensitivity to small temperature changes.

It is an object of the present invention to provide a means whereby many identical thermal sensing devices may be produced upon a substrate formed of a semi-conducting glass ceramic composition, such glass ceramic materials being produced initially as an isotropic glassy material, the structure, specific resistivity and resistance/temperature characteristics of which may be accurately controlled by specific treatment and processing.

Another object of the present invention is to provide a means whereby highly accurate differential thermal sensors or a plurality of sensors in the form of a matched array may be produced.

Differential thermal sensors are virtually unknown in a close tolerance matched form since the required tracking of resistance/temperature, thermal mass and radiation incidence factor are usually unobtainable in commercially produced devices, for example in devices of the thermistor type.

A further object of the present invention is to provide a means whereby multiple, high accuracy thermal

0141580

-4-

sensors may be fabricated upon a substrate of semi-conducting glass ceramic material.

A further object of the present invention is to provide a means whereby the surface resistivity and bulk resistivity to a desired depth, together with the resistance/temperature characteristic of a specified glass ceramic substrate, may be controlled and modified by means of gaseous chemical/diffusion process applied to the substrate material.

A further object of the invention is to provide a means for 'trimming' the resistance of a thermal sensor to any level of tolerance matching at a specified temperature or range of temperature.

Thus, according to the present invention there is provided a glass ceramic material, which material, broadly defined, has the following composition by weight:

a. transition metal oxides:                 5 - 60%
   (e.g. titanium dioxide, nickel oxide,
   vanadium pentoxide, zinc oxide,
   manganese dioxide, ferric oxide)

b. alkaline earth metal oxides:             2 - 33%
   (e.g. calcium oxide, magnesium oxide,
   barium oxide, strontium oxide)

c. alkali metal oxides:                    0.7 - 16%
   (e.g. lithium oxide, sodium oxide,
   rubidium oxide, potassium oxide)

d.  glass-forming oxides:                    3.7 - 40% (e.g. phosphorus pentoxide, silicon dioxide, aluminium oxide, boric oxide)

e.  modifying oxides:                        0 - 39% (e.g. manganese oxide, zirconium oxide, uranium oxide, silver oxide, stannic oxide)

The components from which the glass ceramic material is formed may be in the form of oxides or preferably in the form of co-precipitated phosphates or hydroxides, or hydrated oxides, or in the form of a compound which decomposes to give the required oxide upon thermal dissociation in an oxidising atmosphere, for example nitrates, carbonates, phosphates, oxalates, formates, malonates or the like, or in the form of an ammonium complex, for example ammonium phosphate. Generally speaking, materials of the highest commercial purity are required for the production of the glassy material, which is the precursor of a semiconducting glass ceramic substrate.

Two specific examples of the glass ceramic material according to the present invention, which can be used as precursors for semiconducting glass ceramics, have the following compositions, which are given as a practical embodiment of the base material as formed from the melt (given as stable oxides):

## Composition "A"

| | | |
|---|---|---|
| sodium oxide | $Na_2O$ | 13.6 parts by weight |
| ferric oxide | $Fe_2O_3$ | 27.16 parts by weight |
| zinc oxide | $ZnO$ | 17.55 parts by weight |
| titanium dioxide | $TiO_2$ | 13.23 parts by weight |
| phosphorus pentoxide | $P_2O_5$ | 19.70 parts by weight |
| stannic oxide | $SnO_2$ | 1.27 parts by weight |
| manganese dioxide | $MnO_2$ | 0.000250 parts by weight |
| cobalt oxide | $CoO$ | 0.000065 parts by weight |
| vanadium oxide | $V_2O_5$ | 48.5 parts by weight |
| barium oxide | $BaO$ | 2.0 parts by weight |

## Composition "B"

| | | |
|---|---|---|
| sodium oxide | $Na_2O$ | 17.69 parts by weight |
| ferric oxide | $Fe_2O_3$ | 0.57 parts by weight |
| zinc oxide | $ZnO$ | 21.78 parts by weight |
| titanium dioxide | $TiO_2$ | 13.00 parts by weight |
| phosphorus pentoxide | $P_2O_5$ | 24.29 parts by weight |
| stannic oxide | $SnO_2$ | 0.06 parts by weight |
| manganese dioxide | $MnO_2$ | 0.000030 parts by weight |
| cobalt oxide | $CoO$ | 0.000045 parts by weight |
| vanadium oxide | $V_2O_5$ | 60.62 parts by weight |
| barium oxide | $BaO$ | 2.00 parts by weight |

Composition "A" gives a high substrate resistivity material, whereas composition "B" gives a low resistivity substrate material.

Generally, in melting the above compositions, co-precipitated phosphates and hydroxides are employed, rather than stable oxides, in order to attain a high degree of admixture of the base constituents. Techniques for admixing these components include milling, shearing and comminution and are well known within the ceramics industry.

In addition, it is necessary to increase the amount of phosphoric oxide in the composition to compensate for volatile loss of this oxide at elevated melting temperatures. An increase in the amount of phosphoric oxide also enables the glass phase to form at a lower melting temperature and thus gives some degree of stability to the glassy phase. Typically, the phosphoric oxide content can be increased by 10 - 30% prior to furnace operations.

Melting of the components as outlined above is preferably carried out in an oxidising atmosphere at a temperature of from 1200 to 1780°C.

Following adequate melting procedures to assure homogeneity of the melt, the glass is cooled rapidly by pressure chilling. A rate of cooling of approximately 600 to 1000°C. per second is required to stabilise the glass phase. The chilling operation is carried out by pressing a 'gob' of molten glass composition between two rapidly closable platens held at a temperature of from 330 to 470°C. A preferred form of cooling is by pressure chilling using a compound platen formed from vertically oriented copper-beryllium alloy strips held by tie bolts and having a flat milled surface, which surface contacts the glassy material during the pressure chilling operation.

Thus, the glassy material can be obtained in the form of vitreous discs of up to 100 mm. in diameter and from 1 mm. to 2 mm. thickness, without separation or crystallisation, and are then cooled from between 300$^{\circ}$C. and 450$^{\circ}$C. to ambient temperature in order to anneal and alleviate strain in the glass discs so produced. The preferred rate of cooling is 7$^{\circ}$C. per minute or less.

The cooled glass discs are then formed by an edge grinding operation to give a true circular shape. This enables easy mounting of the discs and avoids angular edges which may initiate crack propagation in subsequent processing.

About twelve such discs can be produced from a 1 kg. scale melt.

The discs of glassy material are then ground roughly flat on one side, using a wet silicon carbide slurry on a rotating table. This allows the discs to be set up on accurate grinding and polishing jigs. The discs are then further ground and lap polished on a pitch fixture. The tolerance on parallelism should be in the order of 30 secs. per arc. across a 100 mm. diameter glass disc and the surface roughness of the order of 4 - 5 wavelengths of sodium light. The discs of glass are thus ground to a final thickness of about 0.5 mm.

Following the grinding and lapping operations, the discs are cleaned and then laid upon a flat inert foil, such foil preferably being a relatively inert material, such as a platinum or nickel foil, or a metal film which has been deposited by vacuum techniques on to a low expansion substrate, for example sintered alumina, or laid on a polished silicon nitride disc of high density.

The discs of glass are then loaded into a tube furnace or other appropriate furnace and subjected to a heat ceramising process to develop a fine-grained crystalline structure of the desired type.

Typically, the exact profile of time and temperature to which the discs are subjected is ascertained by experimental techniques which are well known in the art of glass ceramic production. According to the present invention, within the glass ceramic there are developed oxide phases, which often exhibit non-stoichiometry and composing Magneli and other phases of transition metal oxides and mixed oxide products, bound in a phosphate-rich glassy matrix. Such a glassy matrix consists of transition metal phosphate and alkaline metal phosphate glass phase species which may or may not themselves be semiconductive. Where a high temperature of operation of the finished thermal sensor is envisaged, it is necessary to ensure that electronic conduction is attained rather than ionic conduction or electrolyte conduction. At this stage in the processing of the glass ceramic wafer, it may be necessary to remove ionic constituents from the surface of the glass ceramic by a leaching process. Leaching can be carried out by racking the wafers in a silica jig and boiling in 1N sulphuric acid for 2 to 30 hours. This operation is important, especially where the lower resistivity glass ceramic sensors are to be operated at a relatively high temperature, for example $400^{\circ}$C., under a high D.C. bias since ionic migration may alter the characteristics of the device over such a period of time.

The leached or unleached wafers are then subjected to chemical modification of the surface. This is attained by loading the wafers of glass ceramic on to polished silicon nitride jigs which allow the discs to lie perfectly flat. The jig is placed in a gas flow atmosphere furnace capable of operation at a temperature of from 350 to $900^{\circ}$C. A gaseous atmosphere is utilised which is capable of modifying the temperature/resistivity and curve characteristics of the surface layer to a depth of 10 - 20 microns of the glass ceramic wafer to give a desired end result. Such an atmosphere is preferably a three or four component mixture, for example as follows:

Component A:

An inert gas, for example argon, helium or the like, or a mixture of inert gases.

Component B:

A reducing gas, for example hydrogen or ammonia, or a mixture of reducing gases, carbon monoxide, methane or the like.

Component C:

A vaporised organometallic compound of compounds of a transition metal, for example dicobalt octacarbonyl, manganese carbonyl or nickel carbonyl, or a mixture thereof.

Component D:

A modifying gas, for example diborane, nitrogen or the like, or a mixture of modifying gases.

A preferred gas mixture for use in the atmosphere furnace has the following composition:

| | |
|---|---|
| hydrogen | 4.50% by volume |
| nitrogen | 95.45% by volume |
| dicobalt octacarbonyl | 0.04% by volume |
| nickel carbonyl | 0.01% by volume |

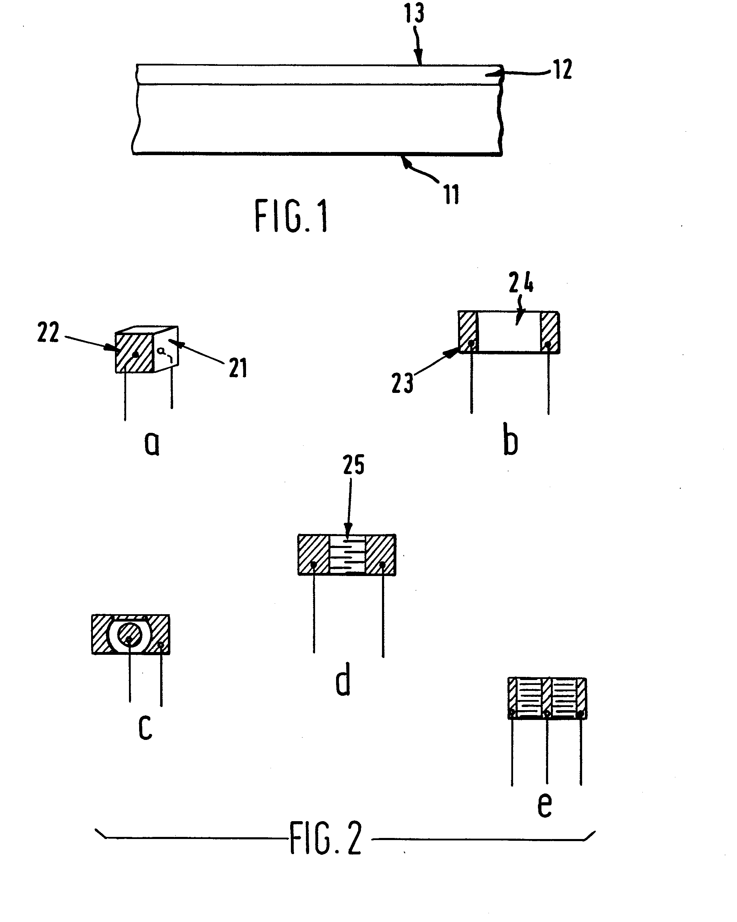

The time and temperature of exposure determines the resultant specific resistivity and curve characteristic of the substrate material. The above gas composition gives both a reductive effect and a chemical modifying effect and allows good control over the surface resistivity of the substrate. If desirable,

0141580

components C or D or both may be terminated from the gas supply during processing to give a further purely reductive effect. Thus, a semiconductive layer is produced upon a higher resistivity substrate (see Fig. 1 of the accompanying drawings, in which 1 indicates a glass ceramic substrate or wafer, 2 indicates a reduced semiconductive layer and 3 indicates the direction from which chemically modifying gases diffuse into and react with the surface/bulk material at a rate determined by time/temperature/concentration). Thus, a glass ceramic composition having the above Composition A may have an initial resistivity in the region of $3.5 \times 10^8$ ohm/cm. prior to processing in the atmosphere furnace and a resistivity of as low as $7.7 \times 10^4$ ohm/cm. after processing.

After the gaseous treatment is finished, the wafers are allowed to cool to ambient at a rate of $7^{\circ}$C. per minute to allow annealing.

It may be necessary at this stage to repolish the surfaces of the glass ceramic wafer, generally where the Tg of the glass phase has been exceeded.

A metallic coating is then applied to each wafer by vacuum metallisation, metals which can be used including aluminium, nickel-chromium and nickel/chromium/gold. This process applies a metallised surface which ultimately provides contacts and a device structure upon the finished thermal sensor.

After metallisation, the wafers are spin or dip coated with an appropriate photoresist material, whereby exposure to ultraviolet light or to an electron beam may be employed via an appropriate photomask, to define a desired patterned structure upon the photoresist, corresponding to the ultimate contact area and electrode structure of the thermal sensor.

The photoresist is developed and stripped from the wafer and the exposed metallisation is then removed by etching to leave delineated ohmic contact structures and a defined electrode pattern upon the surface of the wafer. Generally, a photoresolution of 10 to 25 microns is adequate for high precision sensors.

Thus, on a 100 mm. diameter wafer, many thousands of devices and contact structures may be formed. Five preferred embodiments of such structures are shown in Fig. 2 of the accompanying drawing in which Fig. 2 a) is a cube structure comprising a glass ceramic chip 21 having a metallised surface 22, Fig. 2 b) is a bar structure with a semiconductive surface 23 on a glass ceramic chip 24, Fig. 2 c) is an annular structure, Fig. 2 d) is an interdigitated structure with a metallisation pattern 25 on the surface thereof and Fig. 2 e) is a differential interdigitated structure. The wafer is then scribed by means of a diamond scriber

0141580

-14-

and cracked into single, dual or multiple devices, in the form of small chips, for example, with dimensions of 1.2 mm. x 1.2 mm. The device structures are determined with respect to substrate resistivity, response time and radiation interception of the factor of the finished sensor.

Thus, by means of the processing outlined above, many small 'chips' of semiconductive material can be produced having any desired resistivity and resistance/ temperature curves, which are uniform in size, contact delineation and physical properties. Devices thus produced may have a resistance at $20^{\circ}$C. as high as 100 Megohm or as low as 1 K ohm, depending upon the chosen processing parameters.

The tolerances in terms of resistivity and curve factor of the devices produced from the glass ceramic wafer are reduced to a far lower level than that attainable with conventionally produced thermistor type thermal sensors, where a device may consist of a bead, disk or other structure of oxide composition.

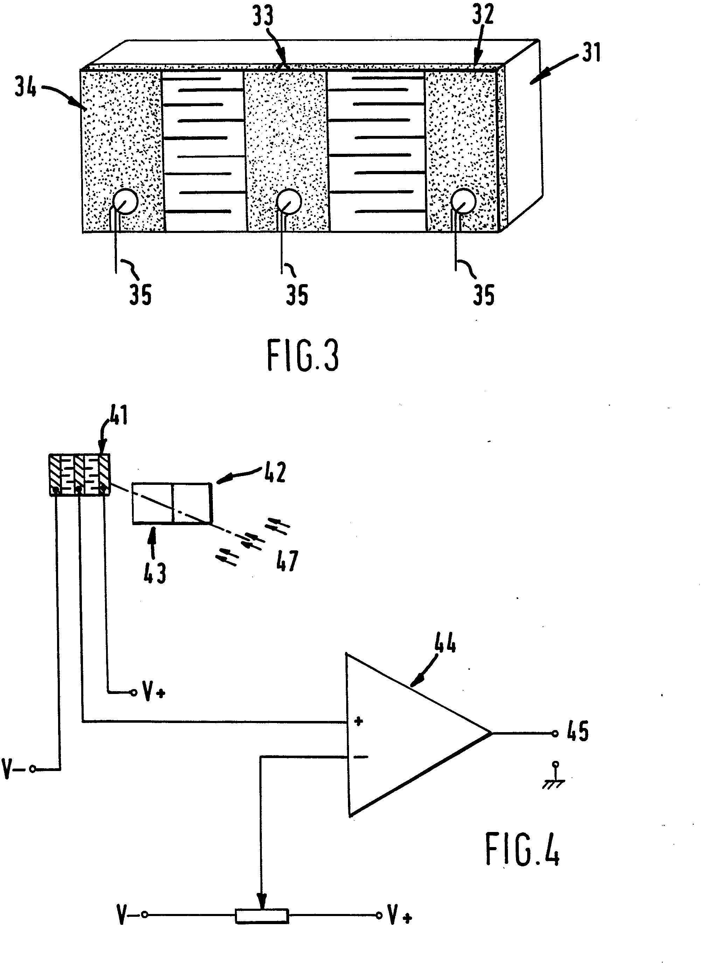

As mentioned hereinbefore, a preferred embodiment of the present invention is in the form of differential heat sensor, a simple form of which can consist of a dual thermal sensor, as illustrated in Fig. 3 of the accompanying drawings comprising an insulating glass ceramic 31 with a semiconductive glass ceramic 32 thereon, having a scribed groove separator 33, a

0141580

metallisation pattern 34 and leadout wires 35, the overall length of which can be, for example, 1.5 mm. Because of the excellent matching of the devices, the problem of device selection may be eliminated.

When produced as chips, the glass ceramic devices are capable of being mounted in any desirable manner. Generally, contacts or leadouts are provided on such devices by means of gold or aluminium or other metallic wire ultrasonically bonded to the ohmic contact area delineated upon the surface of the device.

Furthermore, single, dual or multiple devices may be mounted or encapsulated in a package having a silicon, germanium, polyvinylidene fluoride or other infra-red transmissive window, whereby the device may be utilised as a low cost alternative to pyroelectric sensors in applications such as intruder detection, thermal scanning, hot object detection and fire/flame/explosion detection.

In laboratory tests, a differential device was found to be capable of detecting the presence of a human body at a distance of two metres without collecting optics, a schematic example of such a device being illustrated in Fig. 4 of the accompanying drawings, comprising a differential device 41, an infra-red transmissive window 42, a glass screen 43, a differential amplifier 44, an output 45 to an indicator or alarm and a balance control 46, a source of infra-red radiation being indicated by arrows 47.

Devices produced from glass ceramic materials according to the present invention are extremely stable and may be used, for example, to detect heat emission or to measure temperature in, for example, the range of from $-80^{\circ}$C. to $+600^{\circ}$C., depending upon the specific processing applied to the substrate.

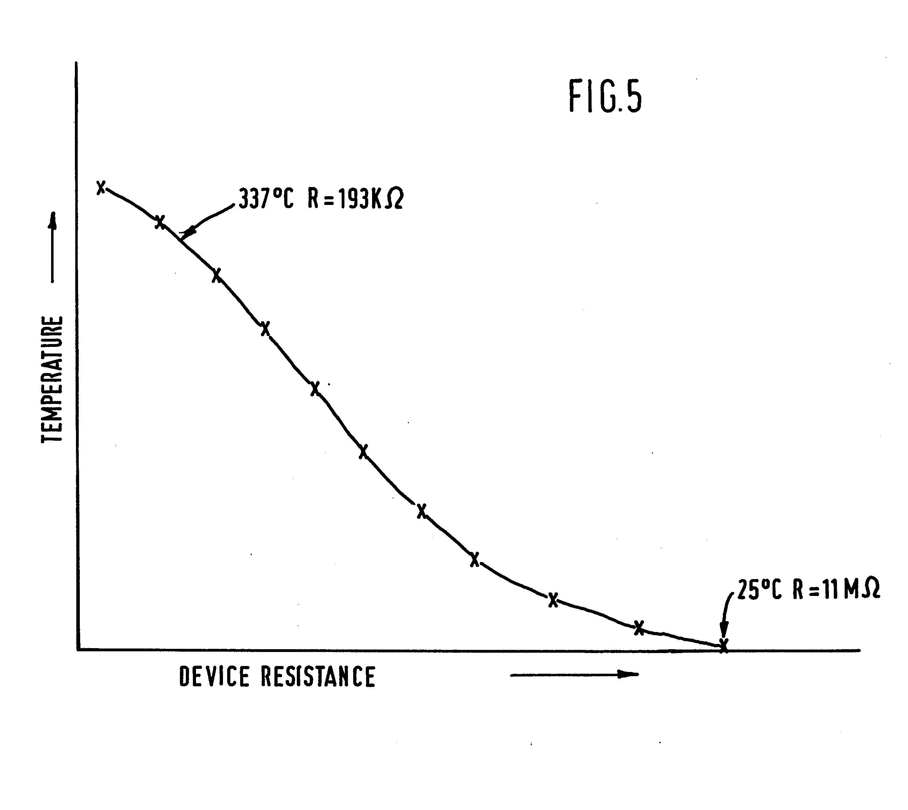

A graphical representation of a resistance/ temperature curve of a single device is given in Fig. 5 of the accompanying drawings, the curve not being corrected for newtonian cooling.

In principle, the characteristics of the device may be varied by the starting composition of the glass, the specific processing applied to the glass ceramic and the device delineation and structure.

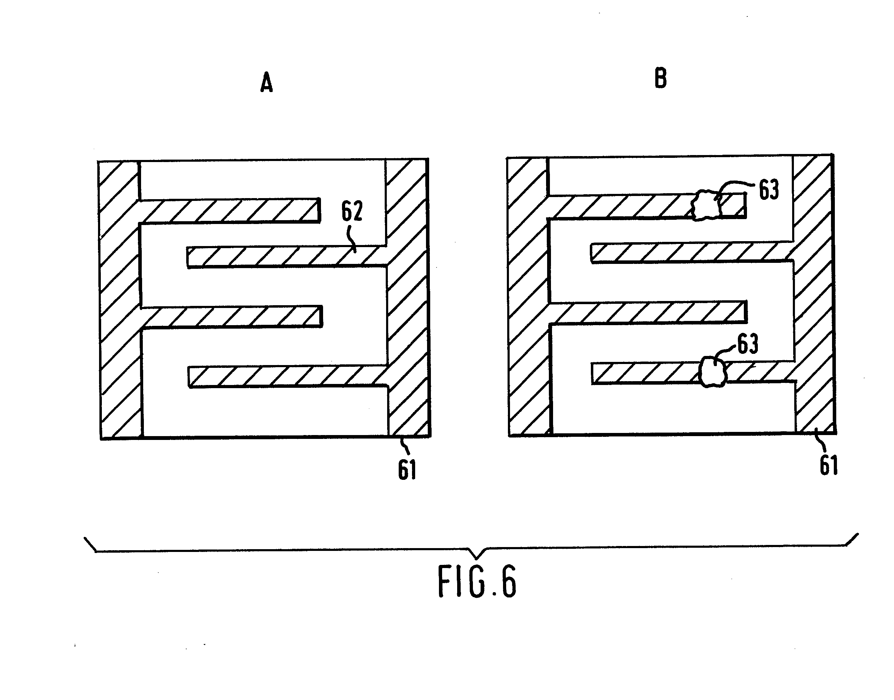

A further method of 'trimming' a device to a highly accurate resistance value is by laser trimming of an ancillary device structure. A pulsed YAG laser operating at about 100 pps was found to be effective in trimming devices to within 0.05% accuracy or better. A drawing of a typical device structure is given in Fig. 6 of the accompanying drawings, in which A) is prior to trimming and B) being after trimming, a sensor chip being indicated by 61, metallisation by 62 and points from which metallisation has been removed by 63.

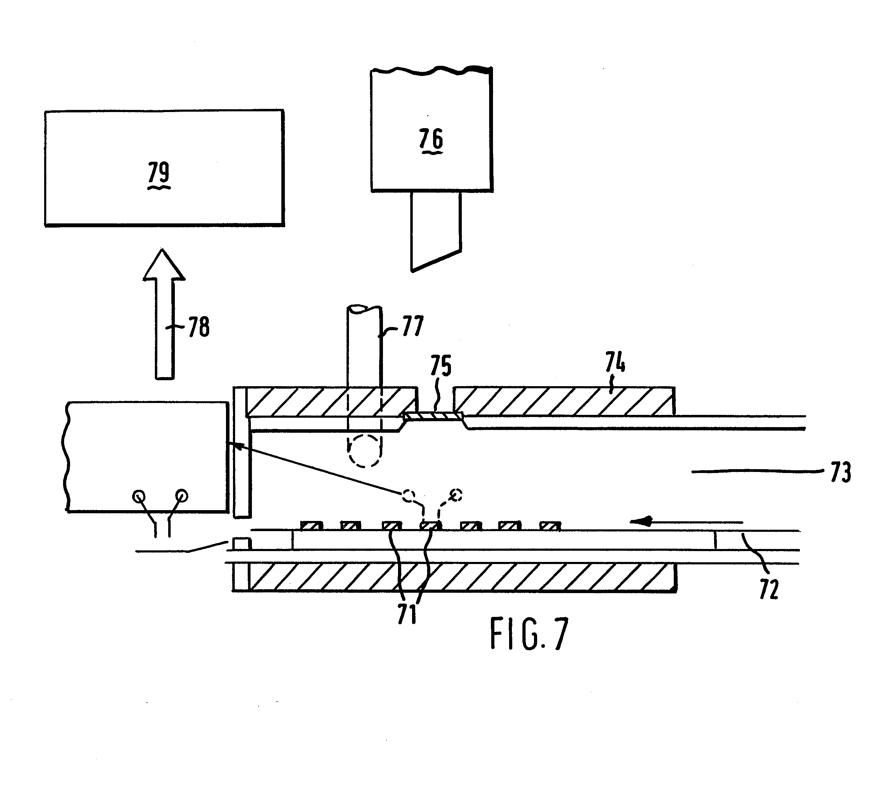

Great care must be taken to remove heat introduced by the laser pulses. A fast circulating gas atmosphere of a high purity inert gas constrained within a thermal shield, the laser pulses being applied via a sapphire or other laser permeable window, has been found to be effective in a trimming process for devices, the devices being supported and transported on a band of "Kapton" film. A diagram of this process is given in Fig. 7 of the accompanying drawings which shows glass ceramic chips 71 moving in the direction of the arrow on a transport film 72 in a tube provided with a clean gas flow 73. The tube is provided with a polysulphone thermal shield 74 provided with a sapphire window 75 through which the glass chips 71 can be irradiated by a pulsed YAG laser 76. Downstream of the window 75 is provided a waste gas duct 77. The large arrow indicates removal of chips 71 from a probe assay 78 to a data logging system 79. Probing of device resistance may be carried out prior to total cooling of the structure since the curve characteristic may be pre-programmed into a read-only memory feeding a data logging system recording device resistance/temperature. It is only possible to trim to a higher value of resistance by this means.

It is also possible to combine two devices, such devices being constructed upon a single substrate chip and having different electrode patterning, to enable curve matching to attain a high degree of accuracy.

The thermal sensor chips may be sensitive to atmospheric moisture or to environmental contamination and generally are encapsulated or packaged prior to use.

In the case of chips requiring a good low energy infra-red response, the devices can be coated, for example, with an infra-red transmissive polymeric coating, for example, by dip coating from a solution of polytrifluorochloroethylene in acetone solution, followed by baking in an oven at 300°C. for a few minutes. Alternatively, the chips may, after lead attachment, be thermally encapsulated within a polymeric material, such as polymethylpentene. Where the device is to be used to measure or monitor temperature, epoxy, polysiloxane, glass or metal packages or a combination of these may be used to package the thermal sensor.

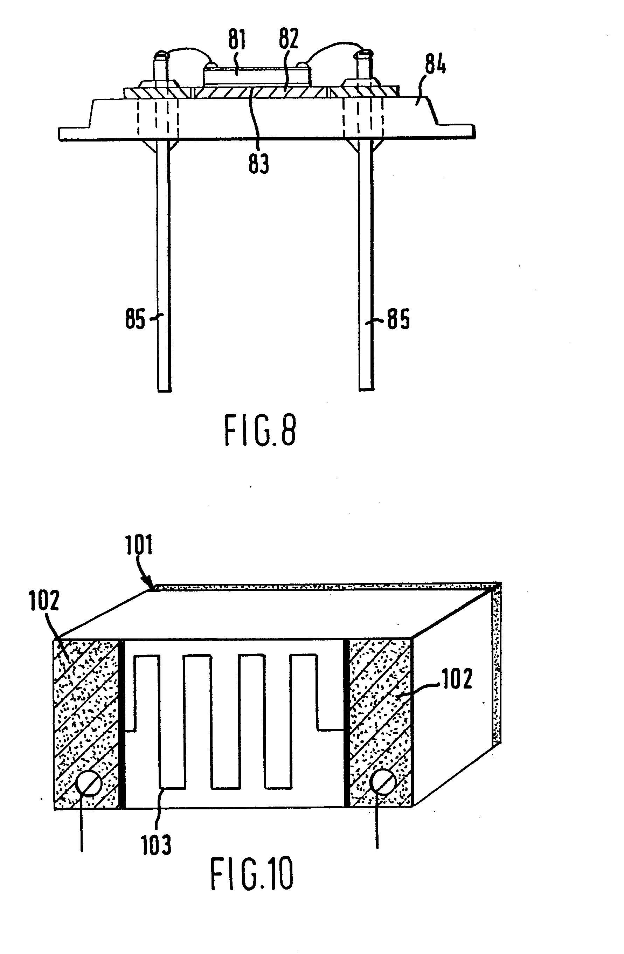

Because of the ease of metallisation of the glass ceramic, back metallised devices may be bonded to package, header or the like, either by soldering, preferably with a low melting point solder, or by utilising a metal-loaded polymeric adhesive, such as a silver/epoxy combination. In the case of differential or multiple devices, tracking between the devices may be improved by bonding the glass ceramic chip to a thermal sink of small dimension, for example, a disc of beryllium oxide attached to the base of a TO39 header. An illustration of this type of construction is given in Fig. 8 of the accompanying drawings, which shows a sensor chip 81, a heat sink (BeO) 82, mounting media 83, a header 84, for example of polysulphone, and lead outs 85.

One of the great advantages of the present invention is the ease with which reproducible, high impedance devices may be produced. Thus, by way of example, a sensor with a resistance of about 27 M ohm at $20^{\circ}$C. and a weight of 2.4 mg., with an active surface area of 0.5 mm. x 0.5 mm., would have a responsivity of about 500 K ohm per $^{\circ}$C. over the temperature range of 18 to $25^{\circ}$C.

The present invention described above provides a strongly negative temperature coefficient device capable of exceeding industry standards when compared to thermistor type devices.

Heated devices may also be constructed by evaporatively coating the rear surface of the glass ceramic element with a resistive material, such as nichrome, or by screening a resistive ink upon the surface. Thus, physically small, indirectly heated devices suitable for liquid level control, air flow measurements and the like may be easily produced.

-20-

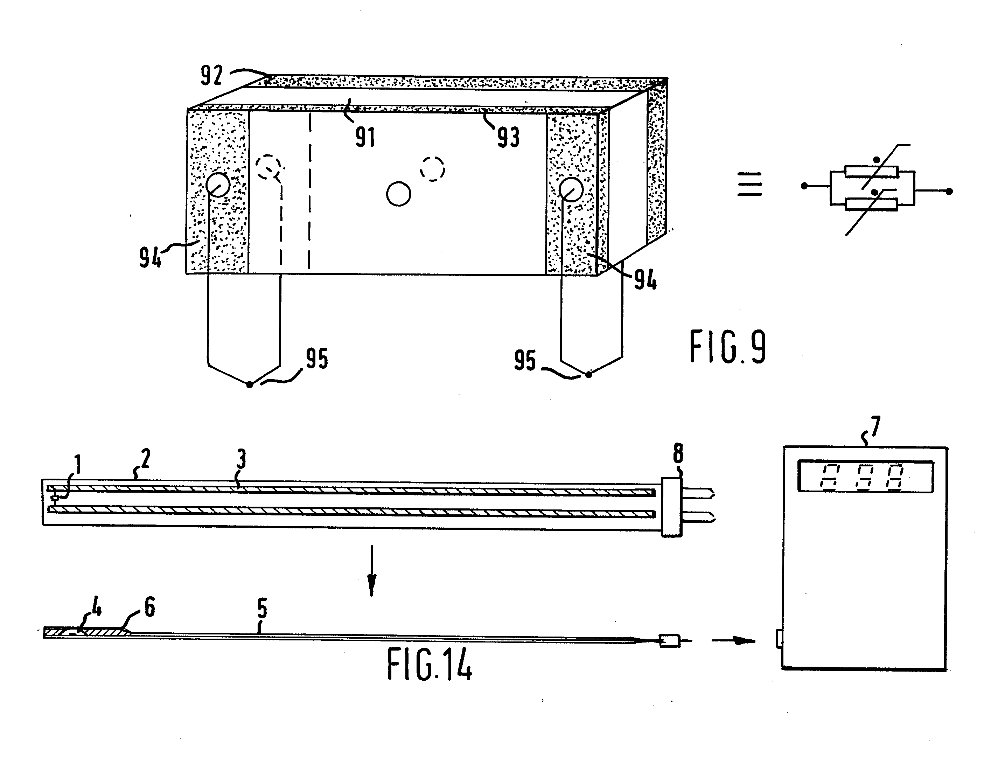

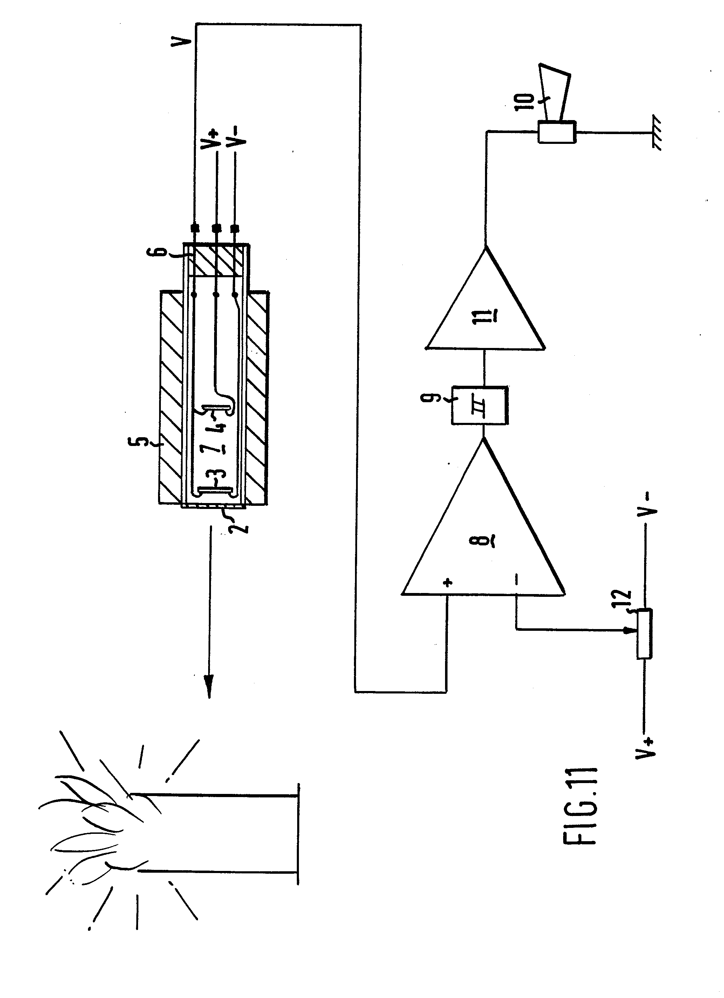

Schematic diagrams of indirectly heated thermal sensors are given in Figs. 9 and 10 of the accompanying drawings.

In Fig. 9, an insulating glass ceramic 91 is provided with a first conductive material 92 and a second conductive material 93 and metallisation 94, with connected sensors 95 in parallel.

In Fig. 10, 101 indicates the face of the device with semiconducting glass ceramic, gold metallisation 102 and nichrome metallisation or semiconductive glass ceramic pattern 103, serving as a heating element.

These forms of construction lend themselves to dip encapsulation, for example in a temperature-resistant epoxy compound, to give a physically small, packaged unit.

For amplitude, gain control or RMS power measurement, the device or devices may be mounted in an evacuated glass or metal housing.

The device can also be mounted in an evacuated chamber to protect the device from incidental heat arising from air currents, the chamber being provided with an infra-red permeable window, for example of silicon or germanium.

Obviously, many modifications and variations of the present invention are possible within the scope of the above teachings.

The following are given as fields in which the present invention is potentially useful and advantageous. The glass ceramic thermal sensor may be used:

1. For temperature measurement and control, for example in disposable thermometers when coupled to a reading instrument, industrial control, domestic thermostat or the like.

2. For flame detection, for example in boiler controls, gas ignition systems and the like.

3. For explosion detection, for example for monitoring chemical plant, gaseous atmospheres and the like.

4. For heat emission detection, for example counting hot objects, monitoring furnace doors or the like.

5. In domestic appliances, for example thermostats in electric irons, cookers, heaters and the like.

6. In thermal touch switches, for example domestic lighting control, access control and the like.

7. For industrial protection of transformers, assemblies, PCB's and the like.

8. For automotive sensors, for example engine temperature and environment monitoring.

9. For liquid level sensing, for example in tanks and chemical process systems.

10. Air and windspeed transducers, for example air flow meters and draught measurement.

11. In fire suppression systems, for example aircraft fuel tank or marine engine monitoring.

12. In medical telemetry apparatus, for example measuring thermal parameters by endoradiosonde techniques.

13. In alarm systems, for example thermally operated intruder alarms.

14. As safety devices, for example thermal cutouts in domestic colour T.V. apparatus.

15. For fire detection, for example rate of rise heat detectors.

16. For hot spot detection, for example in probing high current electrical installations.

17. For gas chromatography, for example in gas flow detectors relying upon specific heat changes.

The following Examples are given for the purpose of illustrating the present invention:-

Example 1.

Explosion/flame detection.

A glass ceramic composition similar to composition A was produced in the form of discs as described above. A small percentage of silver oxide was incorporated into the substrate glass (7.1% by weight $Ag_2O$) to increase the specific conductivity at low temperatures. Single devices were then formed from the discs by the processing stages described above. Referring now to Fig. 11 of the accompanying drawings, two devices were mounted in a glass tube having a thin 0.02 mm. silicon window (2), one device (3) being mounted about 2 mm. from the window and facing the window, the other device (4) being mounted behind the first device and in the shadow of the device. A 3 mm. thick polysulphone thermal shield (5) was placed around the axis of the tube. After termination (6) and filling with dry nitrogen (7), the mounted devices were connected to electronic amplifying circuitry comprising a high gain (Av=2000) instrumentation differential amplifier (8) and associated components feeding a voltage level detection circuit (9). An audible warning device (10) was connected to the level detector via a suitable impedance matching buffer (11).

After applying power to the circuit and setting the balance control (12) so that the audible warning device just ceased operation, the assembly was tested as follows:

A 1 litre sample of nitric oxide saturated with carbon disulphide vapour and contained in a polymethylpentene cylinder (7) was placed 7 metres from the device assembly and facing the silicon window area. This mixture of gases was ignited by means of a taper, the heat emission from the rapidly burning gases triggered the voltage detection via thermal sensor circuitry and actuated the audible warning device. Thus, the glass ceramic thermal sensor may be utilised as an efficient explosion detector.

0141580

-24-

A similar test using a 5 litre sample of propane gas burning in air at a distance of 10 metres also triggered an alarm condition. A device utilised in such a manner would be useful for surveillance of chemical storage tanks, activation of fire/explosion suppression systems, observation of mine workings, monitoring aircraft fuel tanks or domestic appliances, such as heaters, cookers, open fires and the like.

Example 2.

Intruder detection.

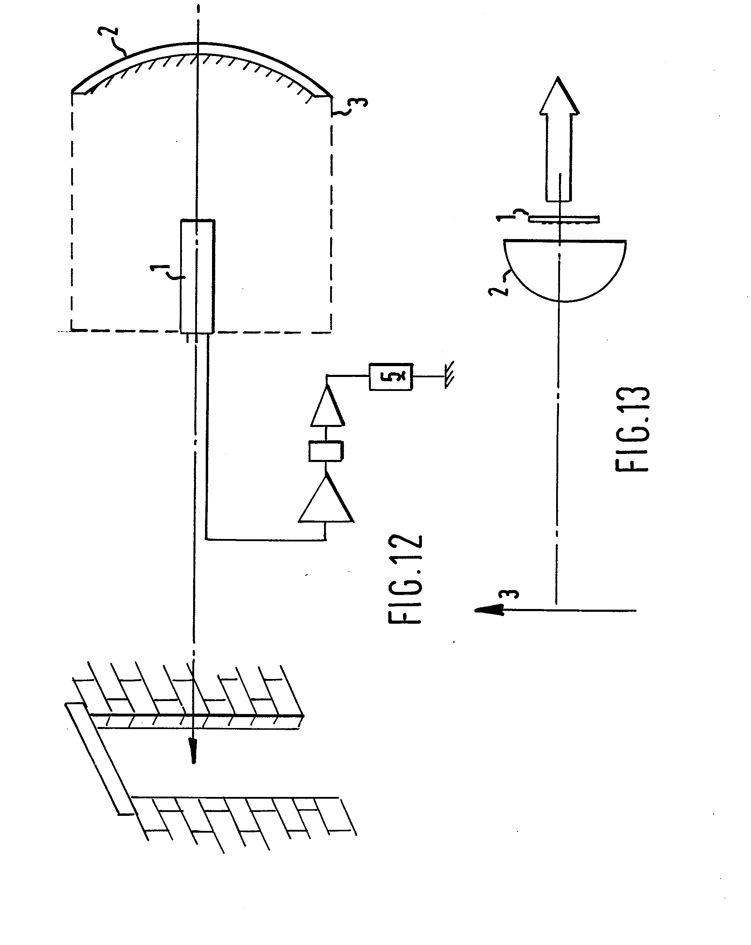

A similar arrangement of two devices as described in Example 1 was set up. Referring to Figs. 12 and 13 of the accompanying drawings, the combined devices (1) mounted in a glass tube were placed at the focal point of a 50 mm. diameter concave mirror (2) (f = 65 mm.) which was gold metallised upon the concave surface. The detector assembly (3) was used to monitor a doorway (4) from a distance of 5 metres, the detection circuitry being as described in Example 1, a changeover relay (5) replacing the audible warning device. A person walking through the door at an average pace triggered an alarm condition, the relay being actuated.

Similarly, an array of five devices (13) mounted at the focal point of a semi-cylindrical lens (2) made from an infra-red transmissive polymer, was capable of analysing the movement of a thermal object (3) moving past the sensor array. An array of devices may thus be used to sense not only the presence but also the direction and speed of a passing thermal object.

Example 3.

Disposable thermometer element.

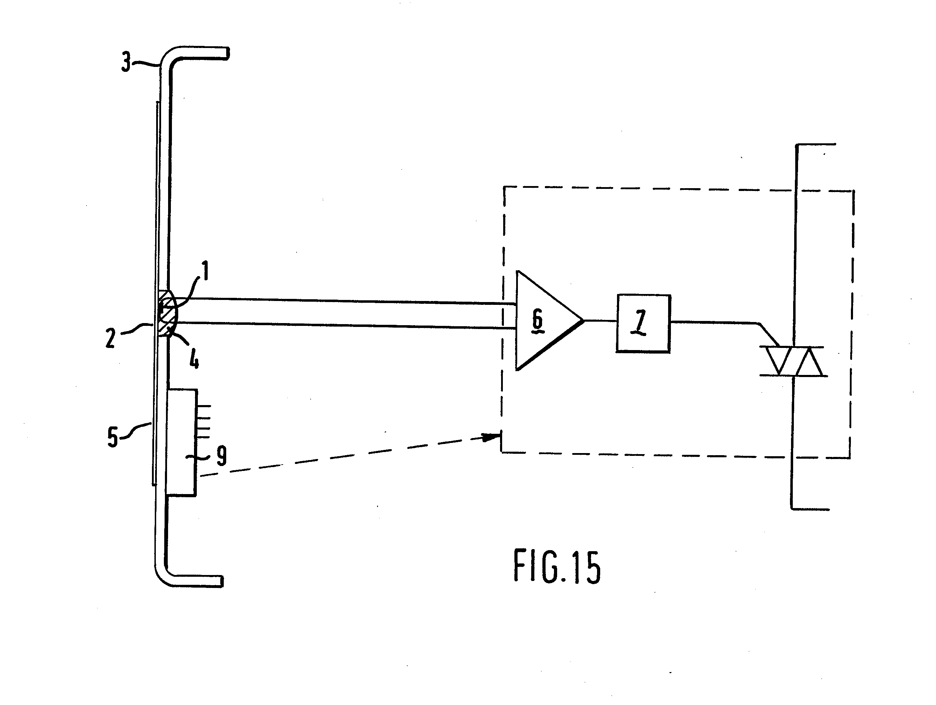

Referring to Fig. 14 of the accompanying drawings, a single element glass ceramic thermal sensor (1) was mounted upon a polyethylene-coated Mylar (polyethylene terephthalate) substrate (2) measuring approximately 1 cm. x 15 cms. The polymeric film had previously been subjected to a screen printing process to develop two metallised conductors formed from a silver epoxy compound upon its surface (3). A high viscosity cyanoacrylate type adhesive was used to fix the device to the polymeric foil. A single drop of a liquid, two-component, heat-curing silicon rubber compound (4) was applied over the mounted sensor. A further piece of polyethylene-coated Mylar film (5) was laminated to the first one using a sintered low density polyethylene powder as a preformed spacer (6). The exposed leads on the polymeric film were terminated with a two pin plug (8).

The completed sensor assemblage was connected to a previously calibrated reading instrument (7) which comprised a bridge-measuring circuit, analogue-to-digital converter and a digital display system.

The sensor as mounted and described above is useful for monitoring oral temperatures and is of sufficient low cost to enable disposal after use. Similarly, a sensor mounted as above was provided with a self-adhesive film which enabled surface temperatures to be measured accurately, for example on incubators.

Example 4.

Thermal touch switch.

Referring to Fig. 15 of the accompanying drawings, a sensor (1) formed from glass Composition B was mounted behind a drilled cavity (2) in a switch plate (3). The chip was again mounted using a two-component, liquid, heat-curing silicone rubber compound (4). Prior to mounting, an embossed polycarbonate film (5) was applied as a legendable surface to the front surface of the switch plate. The output leads from the sensor were directed to a high gain bridge/amplifier circuit (6) feeding a schmitt trigger and bistable circuit (7). The output from the bistable circuit was used to trigger a triac (8) controlling domestic lighting. The circuitry was constructed as a thick film hybrid integrated circuit (9) of small dimensions, mounted behind the switch plate.

It is considered unnecessary to detail the exact circuitry since, to those skilled in the art of electronic design, development of alternative circuitry will present no difficulty.

A finger applied to the switch/sensor enables the triac-controlled lighting circuit to operate after a thermal delay of $< 50$ milliseconds. Touching the switch/sensor again turned off the lighting circuit.

Thus, the glass ceramic thermal sensor can be used as a component in an efficient on/off thermal touch switch.

## Patent Claims

1.    A glass ceramic material comprising, by weight:

a)    5 - 60% transition metal oxide or oxides,

b)    2 - 33% alkaline earth metal oxide or oxides,

c)    0.7 - 16% alkali metal oxide or oxides,

d)    3.7 - 40% glass-forming oxide or oxides and

e)    0 - 39% modifying oxide or oxides.

2.    A glass ceramic material according to claim 1, characterised in that the transition metal oxide a) is titanium dioxide, nickel oxide, vanadium pentoxide, zinc oxide, manganese dioxide or ferric oxide, the alkaline earth metal oxide b) is calcium oxide, magnesium oxide, barium oxide or strontium oxide, the alkali metal oxide c) is lithium oxide, sodium oxide, rubidium oxide or potassium oxide, the glass-forming oxide d) is phosphorus pentoxide, silicon dioxide, aluminium oxide or boric oxide and the modifying oxide e) is manganese oxide, zirconium oxide, uranium oxide, silver oxide or stannic oxide.

3.    A glass ceramic according to claim 1 or 2, characterised in that ionic constituents have been removed therefrom by leaching out.

4.    A glass ceramic according to any of the preceding claims, characterised in that the surface thereof has been subjected to a chemical modification.

5. A glass ceramic according to any of the preceding claims, characterised in that a metallic coating is applied to the surface thereof.

6. A glass ceramic according to claim 5, characterised in that part of the metallic coating is subsequently removed by the use of a photoresist technique to give any desired pattern.

7. The use of a glass ceramic according to any of claims 1 to 6 as a component in a thermal sensor.

8. A thermal sensor, characterised in that it comprises a glass ceramic according to any of claims 1 to 6.

0141580

FIG.1

13

12

11

22

21

a

24

23

b

25

c

d

e

FIG.2

FIG.3

FIG.4

FIG.5

337°C R=193KΩ

25°C R=11MΩ

TEMPERATURE

DEVICE RESISTANCE

0141580

0141580

A

B

62

63

63

61

61

FIG.6

FIG.7

0141580

FIG.8

FIG.10

FIG.9

FIG.14

0141580

FIG.11

0141580

FIG.12

FIG.13

0141580

FIG.15

**EUROPEAN SEARCH REPORT**

0141580
Application number

## DOCUMENTS CONSIDERED TO BE RELEVANT

EP 84307124.2

| Category | Citation of document with indication, where appropriate, of relevant passages | Relevant to claim | CLASSIFICATION OF THE APPLICATION (Int. Cl.4) |
|---|---|---|---|
| X | US - A - 3 816 172 (HOFFMAN) <br> * Column 1, lines 10-18; claim 1 * <br> -- | 1,2 | C 03 C 10/00 <br> H 01 C 7/02 <br> G 01 K 11/00 |
| X | US - A - 3 912 525 (MONNERAYE) <br> * Abstract * <br> -- | 1,2 | |
| A | US - A - 3 802 892 (PIROOZ) <br> * Column 1, lines 1-31; column 2, line 8 - column 3, line 10 * <br> ---- | 1,2, 4-6 | |

|  | TECHNICAL FIELDS SEARCHED (Int. Cl.4) |
|---|---|
|  | C 03 C <br> C 03 B <br> H 01 C <br> G 01 K |

The present search report has been drawn up for all claims

| Place of search | Date of completion of the search | Examiner |
|---|---|---|
| VIENNA | 21-01-1985 | HAUSWIRTH |